(19) Europäisches Patentamt
European Patent Office
Office européen des brevets

(11) **EP 2 194 670 A1**

(12) **EUROPEAN PATENT APPLICATION**

(43) Date of publication:
**09.06.2010 Bulletin 2010/23**

(51) Int Cl.:
*H04L 1/24* (2006.01)    *H04B 10/08* (2006.01)
*H04L 12/26* (2006.01)   *H04L 1/00* (2006.01)

(21) Application number: **08105941.2**

(22) Date of filing: **05.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks Oy
02610 Espoo (FI)**

(72) Inventor: **Michaelis, Thomas
81373, München (DE)**

(74) Representative: **Bruglachner, Thomas E.
Nokia Siemens Networks Oy
COO RTP IPR / Patent Administration
80240 Munich (DE)**

Remarks:
Amended claims in accordance with Rule 137(2) EPC.

(54) **Localisation method for bidirectional interruptions of communication links**

(57)    Localisation method for bidirectional interruptions of communication links (FI) between nodes (N1, N2) in a communication network, comprising the steps of inserting time-stamps (TS1, TS2) into transmitted data signals, storing the last received time-stamp, supervising the connection and transmitting the last received time-stamps to a management system (MSY) and calculating the distance ($X_F$) from a node (N1) to a failure point ($P_F$) according to the last received time-stamps (TS1, TS2).

FIG 1

EP 2 194 670 A1

**Description**

FIELD OF THE INVENTION

The invention refers to a localisation method for bidirectional interruptions of communication links between nodes in a communication network.

BACKGROUND OF THE INVENTION

Communication networks comprise a plurality of nodes connected by links, e.g. optical fibers. The links are often bidirectional operated, whereas signals are transmitted in both directions between adjacent nodes over one single or over two fibers in the same cable.
Several protection methods like e.g. 1:1, 1+1 protection and rerouting methods are known to maintain connectivity if a link is interrupted.
Nevertheless the disrupted link has to be repaired, the exact position of the failure has to be located.
Nowadays, repair teams need to visit the adjacent nodes of the interrupted link. Special measurement devices, e.g. Optical Time Domain Reflectometers (OTDR) for fiber networks, have to be employed at least at one node adjacent to the incident.

OBJECTS AND SUMMARY OF THE INVENTION

Therefore it is an object of the present invention to provide a method for quick failure localization.
According to the present invention, there is provided a localisation method for bidirectional interruptions of communication links between nodes in a communication network comprising the steps of
inserting time-stamps into the transmitted data,
storing the last received time-stamp,
supervising the connection and transmitting the last received time-stamps to a management system, and
calculating the distance from a node to an interruption point according to the last received time-stamps transmitted from the nodes (N1, N2) arranged on different sides of the interruption point ($P_F$).
This method allows a simple calculation of an interruption point and reduces the service expenses.
Signalling and calculation can be executed by methods according to the dependent claims.

BRIEF DESCRIPTION OF THE DRAWINGS

Examples of the invention including a presently preferred embodiment are described below with reference to accompanying drawings, where

    FIG 1 shows a simplified bloc diagram of a network link and
    FIG 2 shows a route-time diagram.

DETAILED DESCRIPTION OF THE INVENTION

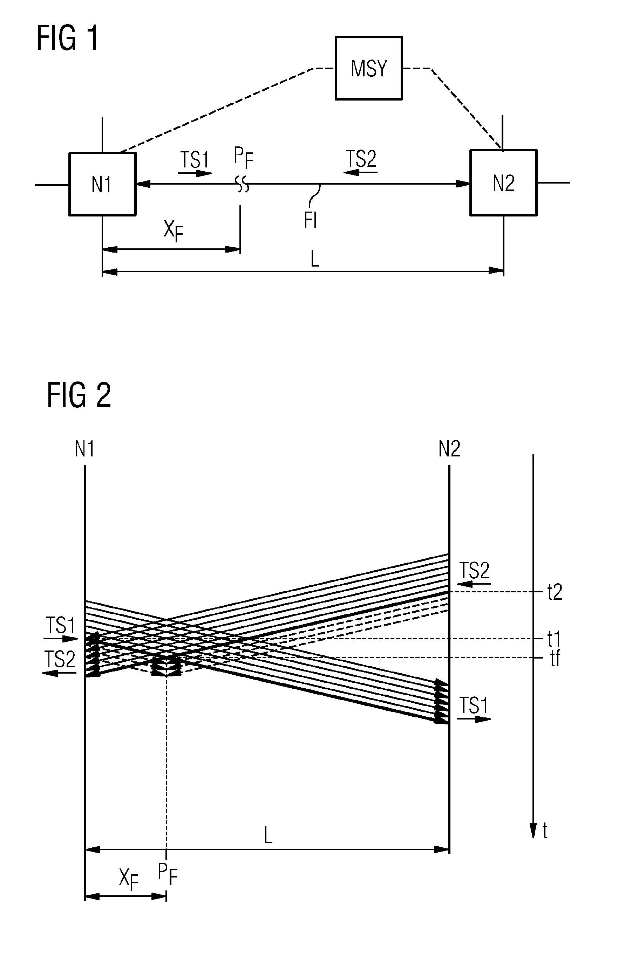

**FIG 1** shows in a bloc diagram a section of a network with two adjacent nodes N1, N2 connected by a bidirectional link FI. Both nodes use the same exact timescale and the transmitters of both nodes inserts time-stamps TS1 and TS2 respectively in the transmitted data signals, e.g. as digital information or any other defined metric. In addition e.g. byte boundaries can be used for fragmentation of the received time marks. The time synchronisation between the nodes could be realized by any synchronisation method exchanging information between the nodes or by special receivers for time signals, e.g. of the Global Positioning System.
The propagation time tg of transmitted signals between two nodes is measured or calculated. It can also be helpful to know the distance between the nodes.
The location method is now explained with reference to **FIG 2.** Both nodes N1, N2 - adjacent nodes or any two nodes of a network, e.g. end nodes, exchanging data signals - are transmitting information comprising said time-stamps. If the data between the nodes is transmitted in data frames the time-stamps may be inserted at a certain data frame position. If the information is e.g. transmitted byte-by-byte the time-stamps are inserted periodically. The time-stamps can even be inserted in an alarm indication signal here also regarded as data signal.
The transmission of time-stamps is illustrated by continuous lines. The transmission of a new time-stamp is represented by a new line. The last received time stamps (or the time stamps of the last received complete data frames) are always stored. The time-stamps TS1 and TS2 shown in FIG 2 are the last received time-stamps before an interruption.

Now, the link is bidirectional interrupted at a "failure time" tf (interruption time). The receivers of both nodes N1, N2 notice the interruption and signal it along with the last received time-stamps TS1, TS2 to a management system for interruption localisation (each entity designed for failure location is here referred to as management system). The last received time-stamps (or an even exacter calculated last successful transmission time) represent the emission times t1 and t2.

The distance $X_F$ to the failure point $P_F$ can be calculated according

$$X_F = v_g(tf - t1) \qquad (1)$$

with $v_g$ = signal (group) velocity (calculated or measured), tf - failure time.

The unknown failure time can be derived from

$$(tf - t1) + (tf - t2) = tg \qquad (2)$$

with

$$tf = (tg + t1 + t2)/2 \qquad (3)$$

inserted in (1)

$$X_F = v_g(t2 - t1 + tg)/2 \qquad (4)$$

or avoiding $v_g$

$$X_F = L(t2 - t1 + tg)/2tg \qquad (5)$$

with L - distance between the nodes N1, N2;

Of course, discrete components causing an additional time delay can be considered by correction the time transmitted in the time-stamp and a more exact calculation of the interruption time is possible e.g. considering a time span between the last received time-stamp and the detected loss of signal, e.g. by counting the received bytes and transmitting a time span value together with the time-stamp to the management system.

For supervising reasons it may be advantageously to forward the time-stamps continuously to the management system or to transmit (additionally) the time-stamp of the last complete received data frame. These may be the time-stamps TS1, TS2 shown in FIG 2 when the interruption occurred after the complete frames have passed the interruption point otherwise foregoing time stamps.

The present invention is not limited to the details of the above described principle. The scope of the invention is defined by the appended claims and all changes and modifications as fall within the equivalents of the scope of the claims are therefore to be embraced by the invention.

REFERENCE SIGNS

N1, N2      nodes
FI          link, fiber

| MSY | management system |
|---|---|
| TS1, TS2 | time stamps |
| $P_F$ | interruption point |
| $X_F$ | distance to the interruption point |
| $t_F$ | failure time |
| t1 | emission time of TS1 |
| t2 | emission time of TS2 |
| L | distance between adjacent nodes |

**Claims**

1. Localisation method for bidirectional interruptions of communication links (FI) between nodes (N1, N2) in a communication network,
   the method comprising the steps of

   - inserting time-stamps (TS1, TS2) into transmitted data signals,
   - storing the last received time-stamp,
   - supervising the connection and transmitting the last received time-stamps to a management system (MSY),
   - calculating the distance ($X_F$) from a node (N1) to an interruption point ($P_F$) according to the last received time-stamps (TS1, TS2) transmitted from the nodes (N1, N2) arranged on different sides of the interruption point ($P_F$).

2. Localisation method according to claim 1,
   further comprising the step of

   - calculating the distance ($X_F$) from a node (N1) to the interruption point according to

   $$X_F = v_c(t2 - t1 + tg)/2;$$

   with $v_g$ - signal velocity; tg - propagation time from node to node; t1 - emission time transmitted by TS1; t2 - emission time transmitted by TS2.

3. Localisation method according to claim 1,
   further comprising the step of

   - calculating the distance ($X_F$) from a node (N1) to the interruption point ($P_F$) according to

   $$X_F = L(t2 - t1 + tg)/2tg;$$

   with L distance between the adjacent nodes N1, N2;
   tg - propagation time from node to node; t1 - emission time transmitted by TS1; t2 - emission time transmitted by TS2.

4. Localisation method according to claim 1, 2 or 3,
   further comprising the step of
   wherein

   - the time-stamps (TS1, TS2) are inserted into the transmitted data signals of adjacent nodes.

5. Localisation method according to claim 1, 2 or 3,
   wherein

   - the time-stamps (TS1, TS2) are inserted into the transmitted data signals of end nodes.

6. Localisation method according to one of the claims 1 - 4,

wherein

- the time-stamp (TS1, TS2) and a time span value representing the time span between the last received time-stamp and a determined loss of signal are transmitted to the management system.

7. Localisation method according to one of the claims 1 - 4,
wherein

- the time-stamps of at last received complete data frames are transmitted to the management system.

8. Localisation method according to one of the claims 1 - 4,
wherein

- the time-stamps (TS1, TS2) are continuously transmitted to the management system and a loss of signal is additional transmitted to the management system.

9. Localisation method according to one of the claims 1 - 4,
wherein

- additional time-stamp of last received complete frames are transmitted to the to the management system.


**Amended claims in accordance with Rule 137(2) EPC.**

1. Localisation method for bidirectional interruptions of communication links (FI) between two nodes N1 and N2 in a communication network, the two nodes N1 and N2 being located on different sides of an interruption point ($P_F$), the interruption point ($P_F$) being located at a distance ($X_F$) from the node N1, the communication network comprising a management system (MSY);
the method comprising the steps of

- inserting time-stamps (TS1, TS2) into transmitted data signals, the data signal including the time-stamps (TS1, TS2) being exchanged between the two nodes N1 and N2 in data frames and the time-stamps (TS1, TS2) being inserted at a certain data frame position,
- receiving the transmitted data signals and storing a last received time-stamp, the last received time stamp (TS1, TS2) being the time stamp of the last complete data frame received by each node (N1, N2) before an interruption occurs,
- transmitting the last received time-stamps (TS1, TS2) to the management system (MSY) when an interruption occurs, each node (N1, N2) transmitting its last received time stamp (TS1, TS2) to the management system (MSY),
- calculating the distance ($X_F$) from a node (N1) to an interruption point ($P_F$) according to the last received time-stamps (TS1, TS2) transmitted from the nodes (N1, N2).

2. Localisation method according to claim 1,
further comprising the step of

- calculating the distance ($X_F$) from a node (N1) to the interruption point according to

$$X_F = v_g(t2 - t1 + tg)/2;$$

with $v_g$ - signal velocity; tg - propagation time from node to node; t1 - time in which TS1 has been transmitted; t2 - time in which TS2 has been transmitted.

3. Localisation method according to claim 1,
further comprising the step of

- calculating the distance ($X_F$) from a node (N1) to the interruption point ($P_F$) according to

$$X_F = L(t2 - t1 + tg)/2tg;$$

with L distance between the adjacent nodes N1, N2;
tg - propagation time from node to node; t1 - time in which TS1 has been transmitted; t2 - time in which TS2 has been transmitted.

**4.** Localisation method according to claim 1, 2 or 3, further comprising the step of wherein

- the time-stamps (TS1, TS2) are inserted into the transmitted data signals of adjacent nodes.

**5.** Localisation method according to claim 1, 2 or 3, wherein

- the time-stamps (TS1, TS2) are inserted into the transmitted data signals of end nodes.

**6.** Localisation method according to one of the claims 1 - 4, wherein

- the time-stamps (TS1, TS2) are continuously transmitted to the management system.

# FIG 1

# FIG 2

Europäisches
Patentamt
European
Patent Office
Office européen
des brevets

# EUROPEAN SEARCH REPORT

**Application Number**

EP 08 10 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/274712 A1 (LEPPLA RALPH [DE] ET AL) 29 November 2007 (2007-11-29) * page 5, paragraph 63 - paragraph 73; figure 6 * * page 1, paragraphs 1,7 * * page 2, paragraph 23 * ----- | 1-9 | INV. H04L1/24 H04B10/08 H04L12/26 ADD. H04L1/00 |
| X | JP 01 005147 A (NIPPON ELECTRIC CO) 10 January 1989 (1989-01-10) * abstract * ----- | 1-9 | |
| A | US 2008/232795 A1 (KLAR ANDREASR [DE] ET AL) 25 September 2008 (2008-09-25) * claim 5 * ----- | 1-9 | |
| A | US 2006/029016 A1 (PELES AMIR [IL]) 9 February 2006 (2006-02-09) * page 3, paragraph 29 * * page 2, paragraph 19 * ----- | 1-9 | |
| A | US 2007/076622 A1 (MUKHERJEE SHUBHENDU S [US]) 5 April 2007 (2007-04-05) * page 3, paragraph 39 * * page 4, paragraph 42 * ----- | 1-9 | TECHNICAL FIELDS SEARCHED (IPC) H04L H04B |
| A | US 2004/225916 A1 (CLARK ALAN D [US]) 11 November 2004 (2004-11-11) * page 2, paragraph 30; figure 2 * * page 1, paragraphs 2,13,18 * * page 2, paragraph 20 - paragraph 21 * * page 3, paragraph 41 * ----- | 1-9 | |
| A | US 5 991 338 A (TROMMEL ERIC SIMON [NL]) 23 November 1999 (1999-11-23) * column 2, line 57 - column 4, line 6 * ----- | 1-9 | |

The present search report has been drawn up for all claims

| Place of search | Date of completion of the search | Examiner |
|---|---|---|
| The Hague | 23 June 2009 | Kazaniecki, Daniel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 10 5941

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2009

| Patent document cited in search report | | Publication date | Patent family member(s) | | Publication date |
|---|---|---|---|---|---|
| US 2007274712 | A1 | 29-11-2007 | EP 1796295 A1 | | 13-06-2007 |
| JP 1005147 | A | 10-01-1989 | NONE | | |
| US 2008232795 | A1 | 25-09-2008 | DE 102007013606 A1 | | 25-09-2008 |
| US 2006029016 | A1 | 09-02-2006 | NONE | | |
| US 2007076622 | A1 | 05-04-2007 | NONE | | |
| US 2004225916 | A1 | 11-11-2004 | NONE | | |
| US 5991338 | A | 23-11-1999 | AT | 233450 T | 15-03-2003 |
| | | | AU | 725695 B2 | 19-10-2000 |
| | | | AU | 4948097 A | 15-05-1998 |
| | | | CA | 2264130 A1 | 30-04-1998 |
| | | | DE | 69719349 D1 | 03-04-2003 |
| | | | DE | 69719349 T2 | 20-11-2003 |
| | | | WO | 9818226 A1 | 30-04-1998 |
| | | | EP | 0932948 A1 | 04-08-1999 |
| | | | ES | 2191831 T3 | 16-09-2003 |
| | | | NL | 1004325 C2 | 22-04-1998 |

EPO FORM P0459

For more details about this annex : see Official Journal of the European Patent Office, No. 12/82